# EUROPEAN PATENT APPLICATION

(11) **EP 2 503 142 A1**
(43) Date of publication of application: **26.09.2012**
(21) Application number: 11158990.9
(22) Date of filing: 21.03.2011
(51) Int. Cl.: F03D 1/06

(54) **Flap for a wind turbine blade**

(71) Applicant: Siemens Aktiengesellschaft, 80333 München (DE)
(72) Inventor: Enevoldsen, Peder Bay, 7100, Vejle (DK); Stege, Jason, 7330, Brande (DK)

(57) **Abstract**

According to the invention the flap for a blade of a wind turbine is prepared to extend along a cord-wise direction of the blade. The flap is even prepared to extend along a lengthwise direction of the blade. The flap is stiff in the chord-wise direction, while it is flexible in the lengthwise direction.

## Description

The invention relates to a flap for a wind turbine blade, while the flap may preferably be attached to the trailing edge of the wind turbine blade.

Flaps are used to improve aerodynamic characteristics of the blade. Preferably they are used to improve the lift/dragratio of the blade.

Preferably they are attached to a blade, which is arranged within a field test.

The flaps may even be attached to blades of a wind turbine, which is already at work at a specific site. Thus the aerodynamic characteristics can be improved in dependency of the specific site conditions. This allows to retrofit or to exchange the blades afterwards in view to the results of the improved aerodynamic characteristics.

Site-specific conditions might be wind-turbulences, specific upwind or downwind conditions, the sea-level of the wind turbine site and the resulting specific weather/wind-conditions thereof, etc.

Flaps being used today are stiff composite constructions typically. Thus they have a tendency to cut through the air quite powerful.

For blade-improvements the flaps are attached to the readymade blade afterwards. Thus there is the need to ensure a stable connection between the flap and the blade while testing.

But there is even the need to minimize risks when the connection between flap and blade is weakened. When the flap falls down to hit the ground a certain area around the wind turbine needs to be save.

It is the aim of the invention to provide an improved flap to minimize the risk of a ceased connection between blade and flap.

This aim is reached by the features of claim 1. Improved embodiments of the invention are object of the dependent claims.

According to the invention the flap for a blade of a wind turbine is prepared to extend along a cord-wise direction of the blade. The flap is even prepared to extend along a lengthwise direction of the blade. The flap is stiff in the chord-wise direction, while it is flexible in the lengthwise direction.

The flap invented is safe for the ambient of the turning blade as it is thin, lightweight and flexible.

The nature of the flap allows the usage of a broader range of adhesives, which are used to connect the flap with the blade.

Due to this wide range of adhesives the flaps can be mounted in a wider range of environmental conditions. A wing-technician could use a one-component adhesive, that doesn't require clamping, may even use an adhesive tape for example, to retro-fit blades by attached flaps.

The flap according to the invention may be made with unidirectional fibers and a flexible matrix. Thus a thin composite component is achieved by casting, for example. The flap may be made by help of the well known VARTM-process to create a composite component as flap.

After the casting of the flap component it may be trimmed by slightly rounding relevant or sharp corners. Thus the risk of injuries is further reduced.

The light flap decreases the chance of injury to those, who are standing on the ground nearby.

Thin components have a tendency to cut through the air like a knife. Thus the falling flap does not decelerate immediately. The flopping effect of the flap, which shows a little lengthwise stiffness, causes the flap to immediately start to decelerate due to drag.

Preferably flap sections are used which are longer than one meter. This ensures the rapid deceleration in case of a falling flap, which broke free from the blade.

The fiber reinforced nature of the flap ensures that the flap will not separate into smaller pieces.

The invention is shown in more detail by help of a drawing. The drawing shows preferred configurations of the invention and thus do not limit the scope of the idea.
FIG 1 shows a cross-sectional view of a wind turbine blade with an attached flap,
FIG 2 shows a top view of a flap according to the invention,
FIG 3 shows an illustration of a flap, which is hitting the ground.

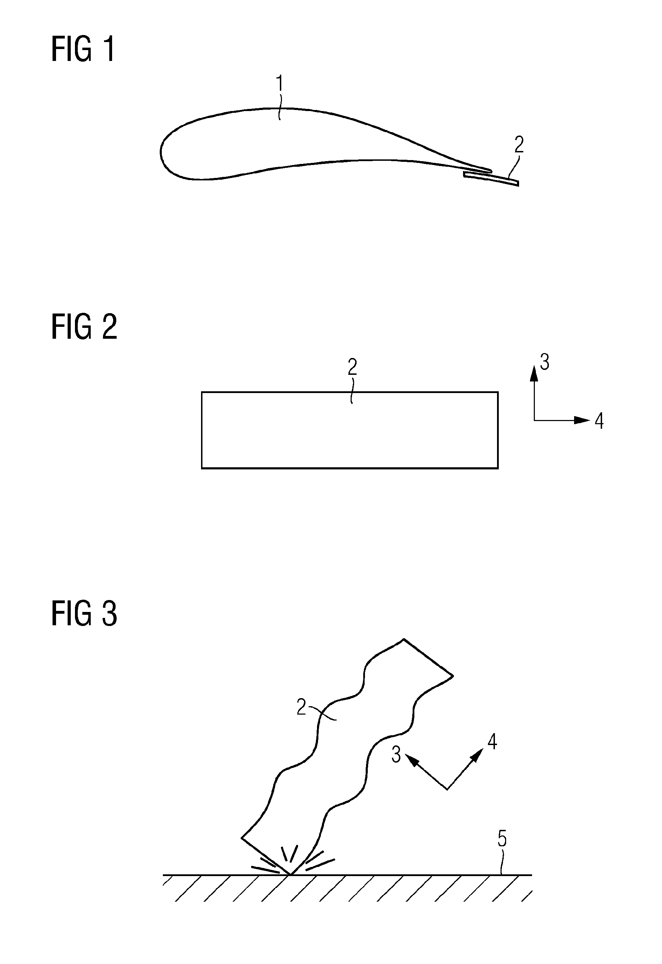

FIG 1 shows a cross-sectional view of a wind turbine blade 1 with a flap 2, which is attached at the leading edge of the blade 1 for example.

The flap 2 may be attached to the blade 1 by help of adhesives for example.

FIG 2 shows a top view of a flap 2, which is made according to the invention, and in reference to FIG 1.

The flap 2 is only illustrated schematically in this top view. A first axis indicates the cord-wise direction 3 of the flap 2 while a second axis indicates the lengthwise direction 4 of the flap 2.

According to the invention the flap 2 is stiff in the chord-wise direction 3 while it is flexible in the lengthwise direction 4.

Thereby the flap 2 will flop like a ribbon, thus it decelerates much faster through the air.

Additionally the flap is built up in a lightweight construction.

The flap according to the invention may be made with unidirectional fibers and a flexible matrix. Thus a thin composite component is achieved, by help of a VARTM-process for example, while the composite component is used as flap.

The unidirectional fibers provide the stiffness, which is needed in the chord-wise direction. The unidirectional fibers provide also the flexibility, which is needed along the lengthwise direction.

The thin composite flap uses the unidirectional fibers to provide the needed minimum chord-wise stiffness.

Preferably a rubberized Vinyl-Ester is used as flexible matrix. Even a thermoplastic may enhance the lengthwise flexibility of the flap.

Thus the flap is thin, lightweight and flexible.

If the connection between the blade and the flap ceases, the falling flap causes no safety issues within a certain area of the wind turbine. Thus the environment within this area is not harmed by the flap hitting the ground.

The resulting flap does not cut like a knife through the air. It mainly flops like a ribbon, allowing the flap to fall slow down to the ground.

Preferably the flap shows a minimum length of one meter, when it is attached to the blade. This length ensures that the flap will fall down like a ribbon.

As the flap shows no stiff structure the flap will collapse when it hits the ground. Thus damaging forces will be spread over time, minimizing any potential damage.

This behavior is shown in FIG 3.

The flap 2 impacts the ground 5 as illustrated. Due to its construction the flap 2 collapses in its lengthwise direction 4. It maintains its structure in its chord-wise direction 3.

## Claims

1. Flap for a blade of a wind turbine,
- where the flap is prepared to extend along a cord-wise direction of the blade,
- where the flap is prepared to extend along a lengthwise direction of the blade,
- where the flap is stiff in the chord-wise direction while it is flexible in the lengthwise direction.

2. Flap according to claim 1, where the flap contains unidirectional fibers, which are arranged to provide a predetermined stiffness needed in the chord-wise direction.

3. Flap according to claim 2, where the unidirectional fibers of the flap are arranged to provide a predetermined flexibility needed in the lengthwise direction.

4. Flap according to claim 2 or 3, where the flap is a casted composite component.

5. Flap according to claim 1 or 4, where the flap is a lightweight construction.

6. Flap according to claim 5, where the flap contains corners, which are trimmed and rounded after its casting.

7. Flap according to claim 1, where the flap is prepared to be connected with the blade of the wind turbine by an applied adhesive.

8. Flap according to claim 1 or 7, where the flap, which is prepared to be connected with the blade, is longer than one meter.
